Europäisches Patentamt

European Patent Office

Office européen des brevets

(19)

(11) Publication number: **0 055 507**
**B1**

**EUROPEAN PATENT SPECIFICATION**

(12)

(45) Date of publication of patent specification: **22.08.84**

(51) Int. Cl.³: **C 08 F 12/00, C 08 F 2/18**

(21) Application number: **81304698.4**

(22) Date of filing: **09.10.81**

(54) Method for suspension polymerization of styrenic monomers.

(30) Priority: **31.12.80 US 221655**

(43) Date of publication of application:
**07.07.82 Bulletin 82/27**

(45) Publication of the grant of the patent:
**22.08.84 Bulletin 84/34**

(84) Designated Contracting States:
**BE DE FR GB IT NL**

(56) References cited:
**US-A-2 907 756**

(73) Proprietor: **MOBIL OIL CORPORATION**
**150 East 42nd Street**
**New York New York 10017 (US)**

(72) Inventor: **Murray, James Gordon**
**9 Lycoming Lane**
**East Brunswick New Jersey (US)**

(74) Representative: **West, Alan Harry et al**
**Mobil Court 3 Clements Inn**
**London WC2A 2EB (GB)**

EP 0 055 507 B1

## Description

This invention relates to the suspension polymerization of styrenic monomers.

It is known that styrene and other styrenic monomers may be polymerized by a variety of techniques, for example solution, bulk, emulsion, and suspension polymerization. In each of these techniques, polymerization results from a free radical-induced, chain-propagation mechanism.

Of the known techniques for providing free radicals for the polymerization of styrenic monomers, one involves simply heating the styrenic monomers to a temperature, for example above 120°C, to cause the generation of free radicals by thermally-induced interactions among the styrenic monomers themselves, a technique often referred to as thermal initiation, and another involves combining catalytic quantities of free radical initiators with the styrenic monomers. These free radical initiators also generate free radicals by thermally-induced decomposition and accordingly, both the "thermally-induced" and the "initiator-induced" techniques are thermal in the sense that they both involve heating of the polymerization system. However, initiator-induced polymerization generally takes place at a lower temperature than thermally-initiated polymerization since free radicals are generated predominately from initiator decomposition rather than from the interaction of styrenic monomers, particularly in the initial stages of the polymerization.

The rate at which polymerization proceeds increases as the concentration of free radicals in the styrenic monomers increases. Also, the concentration of free radicals generated by a given quantity of styrenic monomers or free radical initiators increases as the temperature increases. Accordingly, increasing the temperature generally tends to increase the rate of reaction at least immediately after the temperature is increased. However, if the temperature is held constant, the polymerization rate will tend to decrease with time because, as the polymerization proceeds, less styrenic monomer and/or free radical initiator will remain to generate more free radicals. Accordingly, in order to drive the polymerization to completion, it is known to increase the temperature as the reaction proceeds. It is also known to use a plurality of free radical initiators which decompose at different temperatures. When such a plurality of free radical initiators is used, the temperature may be maintained until one free radical initiator is substantially decomposed, and then increased to decompose one or more of the remaining initiators.

Free radicals can also be generated by incrementally incorporating free radical initiators into the styrenic monomers as the polymerization progresses. Such an incremental incorporation is known in the case of bulk and emulsion polymerizations. However, in the case of suspension polymerizations, special problems are presented with incremental additions of free radical initiators, due to the manner in which styrenic monomers are polymerized in suspension.

In suspension polymerization, styrenic monomers are present as droplets dispersed throughout a continuous water phase. Although the free radical initiators are soluble in styrenic monomers, they are substantially insoluble in water. Accordingly, it is customary to incorporate all of the initiator into the styrenic monomers before the polymerization is started.

U.S. Patent No. 2,907,756 suggests that incremental addition of initiators may be made during the suspension polymerization of styrene but only during the initial stages of the polymerization. More particularly, it states that it is necessary to add all of the initiator before polymerization has progressed to such an extent that intimate mixing of catalyst and styrene monomer is precluded. Specifically, addition of initiator is terminated when the suspension reaches a temperature of about 115°C, corresponding to about 49 percent conversion.

It is understandable why that U.S. patent discourages the addition of initiator to the suspension during the later stages of polymerization, since at these stages, two barriers are present to prevent mixing of initiators and monomers, namely the continuous water phase in which the initiator is insoluble, and the substantial amount of polymer which has formed.

However, in spite of these apparent barriers, it has now unexpectedly been found that initiator can indeed be effectually added during the later stages of a suspension polymerization, when such addition is made in accordance with the present invention.

According to the present invention, there is provided a method for the suspension polymerization of one or more styrenic monomers, optionally together with up to 25% by weight, based on the total monomers, of one or more non-styrenic, vinyl monomers, comprising the steps of

(a) dispersing the monomer(s) as droplets in a continuous water phase;
(b) partially polymerizing the monomer(s) by thermal initiation in the absence of a free radical initiator until from 50% to 90% conversion is achieved; and
(c) substantially completing polymerization by free radical initiation in the presence of at least one substantially water-insoluble free radical initiator.

The term "styrenic monomers" is used herein in its conventional sense to designate aryl vinyl monomers, for example styrene, ring-substituted alkyl styrenes and ring-substituted halo-styrenes. Preferred styrenic monomers include styrene, paramethylstyrene, metamethylstyrene, vinyl toluenes (a mixture of paramethylstyrene and metamethylstyrene), para-t-butylstyrene and parachlorostyrene, an especially preferred styrenic monomer being paramethylstyrene. In addition to one or more such styrenic monomers, the polymerization system may also contain up to 25% by weight, based on the total monomers, of one or more copolymerizable non-styrenic, vinyl monomers. Such non-styrenic vinyl monomers include acrylic monomers such as acrylonitrile.

The suspension in which polymerization is carried out may be prepared by mixing the monomer(s) with water and a minor amount of a stabilizer or suspending agent such as tricalcium phosphate. Accordingly, a small quantity (for example 0.001 to 0.05% by weight of the total charge) of a surface-active agent is preferably used to reduce surface tension. Nonionic, anionic or cationic surface active agents may be used, including alkyl aryl sulfonates and octylphenoxy polyether alcohols. A preferred surface active agent is partially sulfonated paramethylstyrene extender which contains about 10 mole percent sulfonic acid groups.

The water to monomer ratio of the suspension may be, for example, from about 1:1.2 to about 3:1. The desired droplet size of the monomer may be achieved by an appropriate rate of stirring of the suspension. Generally, the droplets will be from 0.5 mm to 0.5 $\mu$m in diameter, for example from 0.15 to 0.25 mm in diameter, or of sufficient size to obtain polymer particles more than 90% of which are retained on a 100 mesh screen.

The suspension may also contain other additives. For example, mineral oil may be included to aid in extrusion of the resulting polymer and/or an expanding agent may be present. Furthermore, a coloring agent or dye may be included in the suspension. More especially, in the case of paramethylstyrene, a blueing agent may be used to overcome the characteristic yellow coloration of the resulting polymer. It is also possible to include additives which stabilize the polymers which are produced from the suspension. One such stabilizer is phenolic antioxidants, for example Irganox 1076 (Ciba-Geigy, Registered Trade Mark).

According to the present invention, the suspension polymerization takes place in two separate stages; the first stage is a thermally-induced polymerization and the second stage is an initiator-induced polymerization.

In the first, thermally-initiated stage the styrenic monomer is polymerized by heating in the absence of a free radical initiator. The temperature to which the suspension is heated depends upon the particular styrenic monomer(s) to be polymerized as well as the desired rate of polymerization to be achieved. For example, when styrene or paramethylstyrene is polymerized, the temperature of the suspension may be from about 120°C to about 150°C during the thermally-initiated stage. Most preferably, the temperature is about 130°—140°C for these monomers.

In general, the temperature of the suspension should preferably be sufficient to achieve a rate of polymerization such that a conversion of from 50% to 90% (based on the total monomers) is achieved within a time period of 2 to 8 hours. Preferably, the rate of polymerization is permitted gradually to decrease, but should remain fairly constant during this period. Thus, for example, the rate of polymerization may be between 30% conversion per hour and 5% conversion per hour at any time during the thermally-initiated stage. Accordingly, in the case of styrene or paramethylstyrene a temperature of as low as, for example 120°C may be sufficient to initiate polymerization in the absence of a free radical initiator, but the rate of polymerization at this temperature may be undesirably slow. Furthermore, when a suspension of these monomers is heated to a temperature as high as 160°C, the resulting polymer may have an undesirably low molecular weight, characterized by, for example a high melt index. Suspension instability problems may also be encountered when the temperature of the suspension is undesirably high.

The end of the thermally-initiated stage of the polymerization may be expressed in terms of the percent conversion achieved. More particularly, the thermally-initiated stage ends after the conversion is at least about 50% but before the conversion reaches about 90%. Preferably, the thermally-initiated stage ends after 60—80% conversion of the monomer.

After the thermally-initiated polymerization stage is finished, the remainder of the polymerization, for example at least 10% conversion, is induced by incorporation of at least one substantially water-insoluble free radical initiator into the suspension. Examples of such free radical initiators include organic peroxy compounds such as lauroyl peroxide, benzoyl peroxide, t-butylperbenzoate, and t-butylperoxyacetate. Although these organic peroxy compounds are not necessarily absolutely water-insoluble, particularly when used at the elevated temperatures contemplated by the present invention, nonetheless, they are substantially water-insoluble and are quite distinguishable from the water-soluble initiators used in emulsion polymerization, such as potassium persulfate.

The substantially water-insoluble initiators are preferably added to the suspension of styrenic monomer(s) and polymer(s) as suspensions or solutions in water-miscible solvents. An example of such a suspension of an initiator is a suspension of benzoyl peroxide in methylene chloride containing a suspending agent such as "Gelvatol" (Monsanto) which is polyvinyl alcohol. An example of a solution of an initiator is a solution of t-butylperoxyacetate dissolved in methanol.

As with the thermally-initiated stage of the polymerization, the temperature of the suspension containing the free radical initiator should not be so high as to generate excessive free radicals, resulting in a low molecular weight product. Accordingly, it may be desirable to cool the suspension before the free radical initiator is incorporated therein. This cooling may be achieved for example, by means of cooling coils. Preferably, however, the temperature of the suspension at the end of the thermally initiated stage and the nature of the free radical initiator are such that the initiator can be added to the suspension without cooling. Thus, for example, when paramethylstyrene is thermally polymerized at 130°C, t-butylperoxyacetate may be added to the suspension without prior cooling and the polymerization may be continued at 130°C. Accordingly, it is possible to conduct the two-stage process in an isothermal or substantially isothermal fashion.

After the initiator has been incorporated in the suspension, the temperature of the suspension should be adjusted to or maintained at a temperature sufficient to achieve a desired rate of polymerization. Preferably, the temperature and amount of initiator should be sufficient to achieve the substantial completion of the polymerization within a period of from 2 to 8 hours. It is also preferred to polymerize the styrenic monomer(s) at a relatively constant rate during this stage of the polymerization. Thus, for example, the rate of polymerization during the free radical-induced polymerization stage may be maintained between 3% and 25% conversion per hour.

It will be understood that one or more initiators may be used in the initiator-induced stage of the polymerization. These initiators may be added all at once at the beginning of this stage but are preferably added in a continuous or an incremental fashion. Thus, for example, t-butylperoxyacetate may be added at brief intervals (for example, at about 25 minute intervals) while the suspension is maintained at a temperature of about 130°C.

After the initiator-induced polymerization, the polymerization of the styrenic monomer or monomers is substantially completed. More particularly, the conversion is suitably at least about 99% and preferably at least about 99.9%. The polymer may then be isolated from the suspension by any convenient means, such as washing.

In accordance with the present invention, it is possible to obtain polymers having especially desirable properties. For instance, polymers produced in accordance with the present invention may have a relatively narrow range of molecular weights. This range may be expressed quantitatively in terms of the molecular weight distribution (MWD) of the polymer, which is the ratio of the weight average molecular weight ($M_W$) to the number average molecular weight ($M_N$). More particularly, the MWD for paramethylstyrene homopolymers, produced according to the present invention, may be about 3 or less.

It is also possible to achieve a desirable extrudable polymer in accordance with the present invention, as evidenced by the relatively low die swell index (a measure of extrudate diameter to die diameter) of the resulting polymers. Thus, the die swell index for a paramethylstyrene homopolymer produced according to the present invention may be from 1.4 to 1.6. By way of contrast, when a paramethylstyrene polymer is produced according to a conventional suspension process (for example where both benzoyl peroxide and t-butylperbenzoate are added to the suspension at the start of polymerization), the resulting polymer may typically have a MWD of from 5 to 10 and a die swell index of from 1.8 to 2.0.

In accordance with the present invention, initiator levels can be reduced by from 50 to 90% over conventional processes in which initiator is added to the suspension at the beginning of the polymerization. Furthermore, cycle times can be reduced by up to 25% for batch preparations of comparable styrenic polymers. Moreover, molecular weights and distributions may be more easily controlled to narrow limits.

The following Examples illustrate the invention.

Example 1

A suspension of 315 g of paramethylstyrene in 330 g of water was prepared using 6.4 g of tricalcium phosphate and 32 mg of polyparamethylstyrene containing 10 mol percent sulfonic acid groups. This suspension in a 1-liter autoclave was stirred at 600 rpm using a 2.5 inch (6.35 cm) diameter pitched blade stirrer and was heated at 140°C for 4 hours without added initiator. At the end of this time the suspension was cooled to 85°C and a dispersion of 0.16 g of benzoyl peroxide (BP) in water was added thereto. This dispersion was prepared by dissolving the benzoyl peroxide in methylene chloride, adding the solution to 15 ml of water containing 9 mg of "Gelvatol" and evaporating off the methylene chloride.

Stirring of this suspension was continued at 95°C and after 1 hour an additional 0.08 g of benzoyl peroxide dispersed in water was added. After a total of 2 hours at 95°C, a solution of 0.2 g of t-butylperoxyacetate (TBPA, "Lupersol 70" [Lucidol, Registered Trade Mark]) dissolved in 10 ml of methanol was added and the mixture was heated to 120°C for one hour and then to 130°C for one hour.

At the end of this time (8 hours total), the conversion was greater than 99.9% and the product had molecular weights determined by gel permeation chromatography of $M_W$=252,100 and $M_N$=92,250 (based on polystyrene calibration standards). Hence, MWD=2.7. The melt index (condition G) was 2.79.

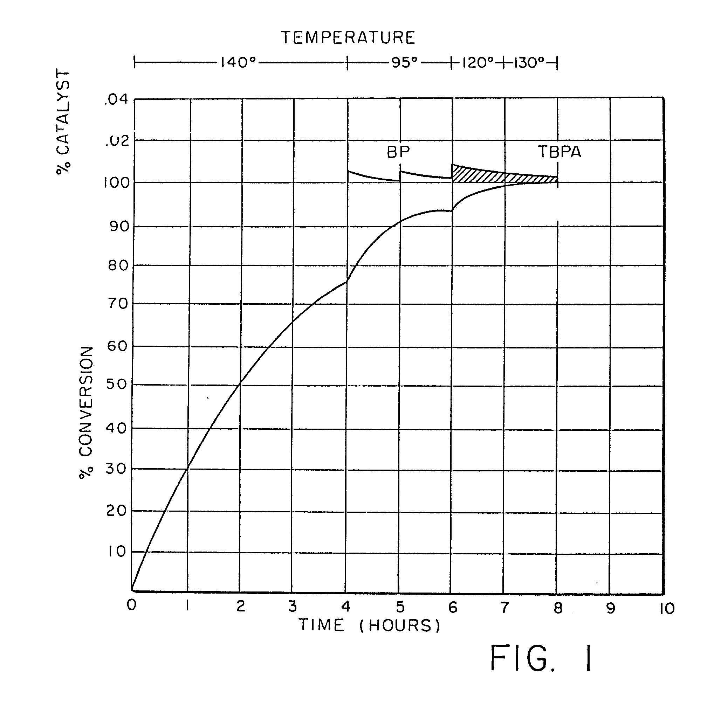

During the course of polymerization, conversion was monitored periodically and the data obtained are set out in Figure 1 of the accompanying drawings as a plot of % conversion against time. The figure also includes the calculated initiator concentrations during the latter stage of the polymerization, and an indication of the polymerization temperatures.

Example 2

A 2 liter autoclave was charged with 630 g of paramethylstyrene, 660 ml of water, 32 mg of Irganox 1076, 1.2 mg of Perox blue dye (Morton Chemical Company), about 80 mg of polyparamethylstyrene extender containing 10 mol percent sulfonic acid groups and 12.4 g of tricalcium phosphate. This mixture was purged with nitrogen and heated to 130°C while stirring at 600 rpm. After 6 hours at 130°C, 0.72 ml of a 10% solution of Lupersol 70 (a 70% solution of t-butylperoxyacetate) in methanol was injected into the autoclave. Thereafter, at 25 minute intervals, a total of 9 injections of 0.36 ml of a 10% solution of Lupersol 70 in methanol were added into the autoclave. The temperature was maintained during this stage at 130°C for a total of 5 hours, after which time the conversion had reached 99.85%. The polymer product had a melt index (condition G) of 1.9 and a die swell index of 1.45.

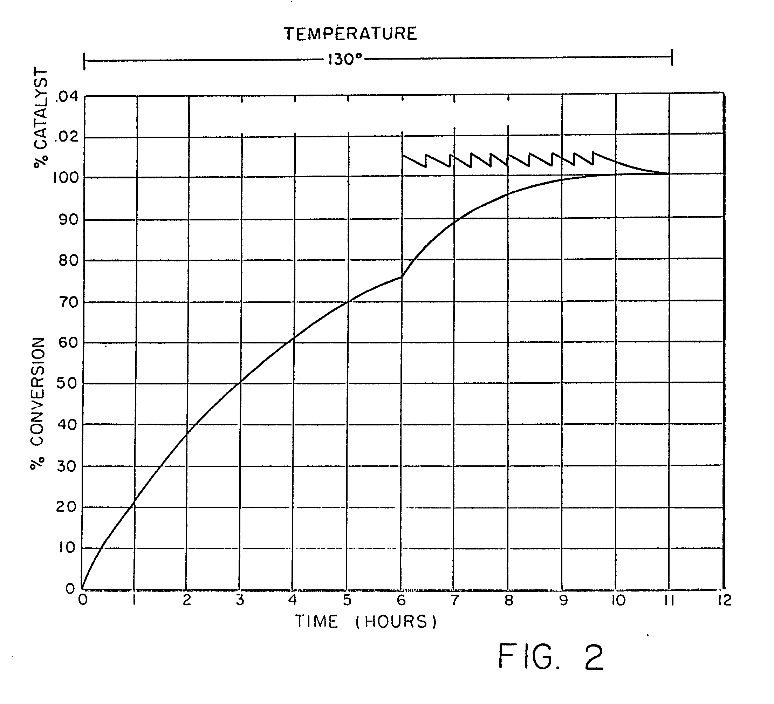

During the course of polymerization, conversion was monitored periodically and the data obtained are set out in Figure 2 of the accompanying drawing as a plot of % conversion against time. The figure also includes the initiator concentrations during the latter stage of the polymerization.

**Claims**

1. A method for the suspension polymerization of one or more styrenic monomers, optionally together with up to 25% by weight, based on the total monomers, of one or more non-styrenic, vinyl monomers, comprising the steps of

(a) dispersing the monomer(s) as droplets in a continuous water phase;

(b) partially polymerizing the monomer(s) by thermal initiation in the absence of a free radical initiator until from 50% to 90% conversion is achieved; and

(c) substantially completing polymerization by free radical initiation in the presence of at least one substantially water-insoluble free radical initiator.

2. A method according to claim 1, wherein step (b) is carried out at a temperature sufficient to achieve from 50 to 90% conversion within a period of from 2 to 8 hours and wherein step (c) is carried out at a temperature and in the presence of an amount of initiator sufficient to achieve the substantial completion of polymerization within a period of from 2 to 8 hours.

3. A method according to claim 1 or claim 2 wherein step (b) is carried out to achieve from 60 to 80% conversion of the monomer(s).

4. A method according to any one of claims 1 to 3, wherein the droplets are 0.5 $\mu$m to 5 mm in diameter.

5. A method according to any one of claims 1 to 4, wherein the substantially water-insoluble free radical initiator is selected from lauroyl peroxide, benzoyl peroxide, t-butylperbenzoate and t-butylperoxyacetate.

6. A method according to any one of claims 1 to 5, wherein the one or more styrenic monomers are selected from styrene, paramethylstyrene, metamethylstyrene, vinyl toluene, para-t-butylstyrene and parachlorostyrene.

7. A method according to any one of claims 1 to 5, wherein the styrenic monomer is styrene.

8. A method according to any one of claims 1 to 5, wherein the styrenic monomer is paramethylstyrene.

9. A method according to claim 8, wherein step (b) is carried out at a temperature of from 130 to 140°C and wherein the initiator in step (c) is t-butylperoxyacetate and is added incrementally or continuously while the suspension is maintained at a temperature of approximately 130°C.

10. A method according to claim 8 or claim 9, wherein the polyparamethylstyrene product has a molecular weight distribution of about 3 or less and a die swell index of from 1.4 to 1.6.

**Patentansprüche**

1. Verfahren zur Suspensionspolymerisation von einem oder mehr styrolischen Monomeren, gegebenenfalls zusammen mit bis zu 25 Gew.-%, bezogen auf die Gesamtmenge der Monomeren, von einem oder mehr nicht-styrolischen Vinylmonomeren, mit den Schritten:

(a) Dispergieren des (der) Monomeren als Tröpfchen in einer kontinuierlichen Wasserphase;

(b) teilweise Polymerisation des (der) Monomeren durch thermische Initiierung in Abwesenheit eines freien radikalischen Initiators, bis eine Umwandlung von 50 bis 90% erreicht ist, und

(c) im wesentlichen vollständiger Abschluß der Polymerisierung durch freie radikalische Initiierung in Gegenwart von wenigstens einem im wesentlichen wasserunlöslichen freien radikalischen Initiators.

2. Verfahren nach Anspruch 1, bei dem die Stufe (b) bei einer Temperatur durchgeführt wird, die ausreicht, von 50 bis 90% Umwandlung innerhalb eines Zeitraums von 2 bis 8 Stunden zu erreichen und bei dem die Stufe (c) bei einer Temperatur und in Gegenwart einer Initiatormenge durchgeführt wird, die ausreichen, die wesentliche Vervollständigung der Polymerisation innerhalb eines Zeitraums von 2 bis 8 Stunden zu erreichen.

3. Verfahren nach Anspruch 1 oder Anspruch 2, bei dem Stufe (b) so durchgeführt wird, daß eine Umwandlung von 60 bis 80% des (der) Monomeren erreicht wird.

4. Verfahren nach einem beliebigen der Ansprüche 1 bis 3, bei dem die Tröpfchen einen Durchmesser von 0,5 $\mu$m bis 5 mm aufweisen.

5. Verfahren nach einem beliebigen der Ansprüche 1 bis 4, bei dem der im wesentlichen wasserunlösliche freie radikalische Initiator unter Lauroylperoxid, Benzoylperoxid, t-Butylperbenzoat und t-Butylperoxyacetat ausgewählt ist.

6. Verfahren nach einem beliebigen der Ansprüche 1 bis 5, bei dem das eine oder mehrere styrolische Monomere ausgewählt sind aus Styrol, Paramethylstyrol, Metamethylstyrol, Vinyltoluol, Para-t-butylstyrol und Parachlorstyrol.

7. Verfahren nach einem beliebigen der Ansprüche 1 bis 5, bei dem das styrolische Monomere Styrol ist.

8. Verfahren nach einem beliebigen der Ansprüche 1 bis 5, bei dem das styrolische Monomere Paramethylstyrol ist.

9. Verfahren nach Anspruch 8, bei dem Stufe (b) bei einer Temperatur von 130 bis 140°C durchgeführt wird und bei dem der Initiator in Stufe (c) t-Butylperoxyacetat ist und portionsweise oder kontinuierlich zugegeben wird, während die Suspension auf einer Temperatur von etwa 130°C gehalten wird.

10. Verfahren nach Anspruch 8 oder Anspruch 9, bei dem das Polyparamethylstyrol-Produkt eine Molekulargewichtsverteilung von etwa 3 oder weniger sowie einen Form-Ausdehnungsindex (die swell index) von 1,4 bis 1,6 aufweist.

## Revendications

1. Un procédé pour la polymérisation en suspension d'un ou plusieurs monomères styréniques, facultativement en combinaison avec jusqu'à 25% en poids d'un ou plusieurs monomères vinyliques non styréniques, par rapport au total des monomères, caractérisé par les étapes suivantes:

(a) on disperse le ou les monomères sous forme de gouttelettes dans une phase aqueuse continue,

(b) on polymérise partiellement le ou les monomères par induction thermique en l'absence d'inducteurs à radicaux libres jusqu'à obtenir une conversion de 50 à 90%; et

(c) on termine sensiblement la polymérisation par induction par les radicaux libres en présence d'au moins un inducteur radicalaire sensiblement insoluble dans l'eau.

2. Un procédé selon la revendication 1, dans lequel l'étape (b) est effectuée à une température suffisante pour obtenir une conversion de 50 à 90% en une durée de 2 à 8 heures et dans lequel l'étape (c) est effectuée à une température et en présence d'une quantité d'inducteurs suffisants pour atteindre une polymérisation sensiblement complète en une durée de 2 à 8 heures.

3. Un procédé selon la revendication 1 ou 2, dans lequel l'étape (b) est effectuée pour atteindre une conversion de 60 à 80% du ou des monomères.

4. Un procédé selon l'une quelconque des revendications 1 à 3, dans lequel les gouttelettes ont un diamètre de 0,5 $\mu$m à 5 mm.

5. Un procédé selon l'une quelconque des revendications 1 à 4, dans lequel l'inducteur radicalaire sensiblement insoluble dans l'eau est choisi parmi le peroxyde de lauroyle, le peroxyde de benzoyle, le perbenzoate de t-butyle et le peroxyacétate de t-butyle.

6. Un procédé selon l'une quelconque des revendications 1 à 5, dans lequel le ou les monomères styréniques sont choisis parmi le styrène, le paraméthylstyrène, le métaméthylstyrène, les vinyltoluènes, le para-t-butylstyrène et le parachlorostyrène.

7. Un procédé selon l'une quelconque des revendications 1 à 5, dans lequel le monomère styrénique est le styrène.

8. Un procédé selon l'une quelconque des revendications 1 à 5, dans lequel le monomère styrénique est le paraméthylstyrène.

9. Un procédé selon la revendication 8, dans lequel l'étape (b) est effectuée à une température de 130 à 140°C et dans lequel l'inducteur dans l'étape (c) est le peroxyacétate de t-butyle et on l'ajoute par portions successives ou en continu tout en maintenant la suspension à une température d'environ 130°C.

10. Un procédé selon la revendication 8 ou 9, dans lequel le polyparaméthylstyrène a une distribution de poids moléculaire d'environ 3 ou moins et un indice de gonflement en filière de 1,4 à 1,6.

0 055 507

FIG. 1

FIG. 2